# EUROPÄISCHE PATENTSCHRIFT

(11) **EP 2 693 700 B1**
(45) Veröffentlichungstag und Bekanntmachung des Hinweises auf die Patenterteilung: **25.02.2015**
(21) Anmeldenummer: 12178677.6
(22) Anmeldetag: 31.07.2012
(51) Int. Cl.: H04L 12/44

(54) **Verfahren zur Nachrichtenübermittlung in einem redundant betreibbaren industriellen Kommunikationsnetz und Kommunikationsgerät für ein redundant betreibbares industrielles Kommunikationsnetz**
Method for message transmission in a redundant industrial communication network and communication device for a redundant industrial communication network
Procédé de transmission de messages dans un réseau de communication industriel pouvant fonctionner de manière redondante et appareil de communication pour un réseau de communication industriel pouvant fonctionner de manière redondante

(43) Veröffentlichungstag der Anmeldung: 05.02.2014
(73) Patentinhaber: Siemens Aktiengesellschaft, 80333 München (DE)
(72) Erfinder: Kießling, Marcel, 90556 Cadolzburg (DE); Lohmeyer, Joachim, 91161 Hilpoltstein (DE)

(56) Entgegenhaltungen:
- EP-A2- 2 001 170
- WO-A1-00/57288
- US-B1- 6 757 777

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus WO 2008/119649 A1 ist ein Verfahren zum Rekonfigurieren eines paketvermittelten Kommunikationsnetzes bekannt, das ein erstes Teilnetz und ein zweites Teilnetz umfaßt. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht. Bei einem solchen Ausfall generiert die Master-Brücke ein erstes Datenpaket und überträgt dies an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfaßt logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 A1 und WO-00/57288 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unter-scheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redudanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

Der vorliegenden Erfindung liegt die Aufgabe zugrunde, ein Verfahren zur Nachrichtenübermittlung in einem redundant betreibbaren industriellen Kommunikationsnetz mit zumindest zwei Teilnetzen anzugeben, das bei Verwendung eines Spannbaum-Protokolls in einem der Teilnetze eine schnelle Netz-Rekonfiguration in einem Fehlerfall ermöglicht, sowie ein zur Durchführung des Verfahrens geeignetes Kommunikationsgerät zu schaffen.

Diese Aufgabe wird erfindungsgemäß durch ein Verfahren mit den in Anspruch 1 angegebenen Merkmalen sowie durch ein Kommunikationsgerät mit den in Anspruch 18 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Nachrichten in einem ersten Teilnetz mit Baumtopologie entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Anhand der ausgetauschten Topologieinformationen wird ein Wurzel-Netzknoten als Basiselement einer Baumtopologie durch die den Netzknoten des ersten Teilnetzes zugeordneten Kommunikationsgeräte ermittelt. Vom Wurzel-Netzknoten ausgehend werden schleifenfreie Verbindungen zu den übrigen Netzknoten des ersten Teilnetzes aufgebaut. In einem zweiten Teilnetz werden Nachrichten entsprechend einem Parallel- oder Ringredundanz-Protokoll übermittelt. Das erste und zweite Teilnetz sind über eine Mehrzahl von Kommunikationsgeräten miteinander gekoppelt. Die den Netzknoten des ersten bzw. zweiten Teilnetzes zugeordneten Kommunikationsgeräte sind vorzugsweise Switches oder Bridges.

Erfindungsgemäß wird als Wurzel-Netzknoten des ersten Teilnetzes ein virtueller Netzknoten konfiguriert, der über jeweils eine virtuelle nicht durch einen Fehler unterbrechbare Verbindung mit sämtlichen Netzknoten des zweiten Teilnetzes verbunden ist. Darüber hinaus werden den virtuellen Netzknoten umfassende Topologieinformationen des ersten Teilnetzes an jeweils einem virtuellen Anschluß von den Netzknoten des zweiten Teilnetzes zugeordneten Kommunikationsgeräten als empfangene Topologieinformationen des ersten Teilnetzes konfiguriert. Durch den virtuellen Netzknoten sowie die virtuellen Verbindungen und Anschlüsse können gedachte bzw. über ihre Eigenschaften konkretisierte Entitäten spezifiziert werden, die physisch zwar nicht vorhanden sind, jedoch hinsichtlich ihrer beschreibbaren Funktionalität Wirkungen entfalten. Der virtuelle Netzknoten sowie die virtuellen Verbindungen und Anschlüsse können beispielsweise durch Software nachgebildet werden, so daß ihre Wirkungen darstellbar sind.

Ein Ausfall eines einem Netzknoten des zweiten Teilnetzes zugeordneten Kommunikationsgerätes oder einer Verbindung zwischen zwei Netzknoten des zweiten Teilnetzes wird erfindungsgemäß ausschließlich entsprechend dem Parallel- oder Ringredundanz-Protokoll behandelt. Dabei wird eine Konfiguration des virtuellen Netzknotens als Wurzel-Netzknoten des ersten Teilnetzes beibehalten. Mit dem erfindungsgemäßen Verfahren kann das erste Teilnetz das zweite Teilnetz als eine vom Wurzel-Netzknoten ausgehende sternförmige Erweiterung behandeln, so daß topologische Änderungen im zweiten Teilnetz grundsätzlich keine Auswirkungen auf Konfiguration und Betrieb des ersten Teilnetzes haben. Insbesondere Fehler oder Störungen im zweiten Teilnetz können schnell auf Basis des dort verwendeten Parallel- bzw. Ringredundanz-Protokolls behandelt werden. Eine damit verbundene Rekonfiguration des zweiten Teilnetzes hat im wesentlichen keine Auswirkung auf das erste Teilnetz.

Der virtuelle Netzknoten wird entsprechend einer bevorzugten Ausgestaltung des erfindungsgemäßen Verfahrens durch Aktivierung jeweils eines virtuellen Anschlusses an zumindest zwei Kommunikationsgeräten konfiguriert, die Netzknoten des zweiten Teilnetzes zugeordnet sind. Vorteilhafterweise werden bei Konfiguration des virtuellen Netzknotens Topologieinformationen des ersten Teilnetzes jeweils anhand eines einem Wurzel-Netzknoten zugeordneten Knotenidentifikators zunächst darauf überprüft, ob bereits ein durch seinen Knotenidentifikator gekennzeichneter virtueller Netzknoten innerhalb des ersten Teilnetzes vorhanden ist. In diesem Fall wird nur bei einem negativen Überprüfungsergebnis ein virtueller Anschluß an einem ersten Kommunikationsgerät aktiviert, das einem ersten Netzknoten des zweiten Teilnetzes zugeordnet ist. Dabei werden einer virtuellen Verbindung zwischen dem ersten Netzknoten und dem virtuellen Netzknoten verschwindende Pfadkosten zugeordnet. Insgesamt kann auf diese Weise verhindert werden, daß durch Konfiguration eines virtuellen Netzknotens mehr als ein Wurzel-Netzknoten im ersten Teilnetz entsteht. Hierdurch würde die Baumtopologie des ersten Teilnetzes ansonsten in unerwünschter Weise geteilt.

Entsprechend einer weiteren Ausgestaltung des erfindungsgemäßen Verfahrens werden bei einem positiven Überprüfungsergebnis Pfadkosten zwischen einem dem ersten Kommunikationsgerät zugeordneten ersten Netzknoten des zweiten Teilnetzes und dem virtuellen Netzknoten ermittelt. In diesem Fall wird nur bei verschwindenden Pfadkosten zwischen dem ersten Netzknoten und dem virtuellen Netzknoten ein virtueller Anschluß an einem zweiten Kommunikationsgerät aktiviert wird, das einem zweiten Netzknoten des zweiten Teilnetzes zugeordnet ist. Dabei werden einer virtuellen Verbindung zwischen dem zweiten Netzknoten und dem virtuellen Netzknoten verschwindende Pfadkosten zugeordnet. Bei nicht verschwindenden Pfadkosten zwischen dem ersten Netzknoten und dem virtuellen Netzknoten kann beispielsweise eine Fehlkonfiguration signalisiert werden, so daß eine zügige Behebung einer Fehlkonfiguration eingeleitet werden kann.

Bei Konfiguration des virtuellen Netzknotens kann entsprechend einer alternativen Ausgestaltung des erfindungsgemäßen Verfahrens überprüft werden, ob sämtliche mit dem virtuellen Netzknoten verknüpften Kommunikationsgeräte innerhalb des zweiten Teilnetzes miteinander verbunden sind. Ist dies entsprechend einem negativen Überprüfungsergebnis nicht der Fall, wird eine Fehlkonfiguration signalisiert. Auch auf diese Weise kann verhindert werden, daß die Konfiguration des virtuellen Netzknotens zu einer Teilung des Kommunikationsnetzes führt.

Netzknoten des zweiten Teilnetzes zugeordnete Kommunikationsgeräte tauschen vorzugsweise untereinander Nachrichten mit Topologieinformationen des ersten Teilnetzes untereinander entsprechend dem Parallel- oder Ringredundanz-Protokoll aus und vergleichen diese mit lokal vorliegenden Topologieinformationen des ersten Teilnetzes. In Abhängigkeit von einem Vergleichsergebnis ermitteln die Netzknoten des zweiten Teilnetzes zugeordneten Kommunikationsgeräte resultierende Topologieinformationen des ersten Teilnetzes. Außerdem passen die den Netzknoten des zweiten Teilnetzes zugeordneten Kommunikationsgeräte anhand der ermittelten resultierenden Topologieinformationen des ersten Teilnetzes ihre Konfiguration hinsichtlich geschlossener bzw. geöffneter Verbindungen zum ersten Teilnetz an. Entsprechend einer weiteren Ausgestaltung des erfindungsgemäßen Verfahrens werden Nachrichten zwischen den Netzknoten des zweiten Teilnetzes zugeordneten Kommunikationsgeräten ausschließlich entsprechend dem Parallel- oder Ringredundanz-Protokoll übermittelt. Somit muß für das zweite Teilnetz keine Baumtopologie mittels eines Spannbaum-Protokolls gebildet werden. Dies trägt entscheidend zu einer schnellen Aktivierung von Ersatz-Verbindungen nach Geräte- oder Verbindungsausfällen bei. Darüber hinaus werden das Spannbaum-Protokoll und das Parallel- oder Ringredundanz-Protokoll im jeweiligen Teilnetz im wesentlichen entkoppelt voneinander angewendet.

Entsprechend einer bevorzugten Ausgestaltung des erfindungsgemäßen Verfahrens umfassen die Topologieinformationen des ersten Teilnetzes Angaben zu bestehenden Verbindungen zwischen Netzknoten des ersten Teilnetzes, und vom Wurzel-Netzknoten ausgehende schleifenfreie Verbindungen zu den übrigen Netzknoten des ersten Teilnetzes werden anhand einer Ermittlung minimaler Pfadkosten zum Wurzel-Netzknoten aufgebaut. Darüber hinaus werden die resultierenden Topologieinformationen des ersten Teilnetzes entsprechend einer weiteren Ausgestaltung durch sämtliche den Netzknoten des zweiten Teilnetzes zugeordnete Kommunikationsgeräte einheitlich ermittelt. Somit können die resultierenden Topologieinformationen konsistent für Netzknoten des ersten Teilnetzes zugeordnete Kommunikationsgeräte zur Anwendung des Spannbaum-Protokolls im ersten Teilnetz bereitgestellt werden.

Beim Spannbaum-Protokoll kann es sich beispielsweise um das Spanning Tree Protocol entsprechend IEEE 802.1d, Rapid Spanning Tree Protocol entsprechend IEEE 802.1D-2004, Clause 17 "Rapid Spanning Tree Protocol (RSTP)" oder Multiple Spanning Tree Protocol entsprechend IEEE 802.1Q-2011, Clause 13 "Spanning Tree Protocols" handeln. Die Nachrichten mit Topologieinformationen des ersten Teilnetzes sind beispielsweise Bridge Protocol Data Units (BPDU) bzw. umfassen vorzugsweise jeweils einen Port Priority Vector, der unter den Netzknoten des zweiten Teilnetzes zugeordneten Kommunikationsgeräten ausgetauscht und abgeglichen wird.

Das Parallel- oder Ringredundanz-Protokoll ist beispielsweise das Parallel Redundancy Protocol entsprechend IEC 62439-3, Clause 4, High-availability Seamless Redundancy-Protokoll entsprechend IEC 62439-3, Clause 5 oder Media Redundancy Protocol entsprechend IEC 62439. Bei Verwendung des High-availability Seamless Redundancy-Protokolls als Ringredundanz-Protokoll umfassen die den Netzknoten des zweiten Teilnetzes zugeordneten Kommunikationsgeräte vorzugsweise jeweils zumindest eine erste und eine zweite Sende- und Empfangseinheit, die jeweils eine Schnittstelle für eine Netzverbindung des zweiten Teilnetzes aufweisen. Das zweite Teilnetz weist in diesem Fall eine Ringtopologie auf. Des weiteren können beide Sende- und Empfangseinheiten eine identische Netzadresse bzw. einen identischen Geräteidentifikator aufweisen. Zudem ist mit den ersten und zweiten Sende- und Empfangseinheiten vorteilhafterweise jeweils eine Signalverarbeitungseinheit verbunden ist, die zu sendende Nachrichten parallel an beide Sendeeinheiten weiterleitet und von den Empfangseinheiten empfangene redundante Nachrichten detektiert. Darüber hinaus ist mit den Signalverarbeitungseinheiten vorzugsweise jeweils ein Koppelelement verbunden, über das ein einfach angebundener Netzknoten oder ein redundanzfreies Teilnetz mit der Signalverarbeitungseinheit verbunden ist. Entsprechend einer weiteren Ausgestaltung des erfindungsgemäßen Verfahrens werden zueinander redundante Nachrichten durch eine einheitliche Sequenznummer gekennzeichnet, wobei in einer der Signalverarbeitungseinheit zugeordneten Speichereinheit Sequenznummern von bereits fehlerfrei empfangenen Nachrichten gespeichert werden. Die Signalverarbeitungseinheit kann somit bei Empfang einer neuen Nachricht dessen Sequenznummer auf Übereinstimmung mit einer bereits gespeicherten Sequenznummer überprüfen.

Bei Verwendung des Media Redundancy Protocol als Ringredundanz-Protokoll entsprechend einer weiteren vorteilhaften Ausgestaltung der vorliegenden Erfindung ist im zweiten Teilnetz ein Kommunikationsgerät als Überwachungs- und Steuerungseinheit konfiguriert. Das zweite Teilnetz weist in diesem Fall eine Ringtopologie auf. Die Überwachungs- und Steuerungseinheit detektiert eine Unterbrechung innerhalb der Ringtopologie anhand versendeter Test-Datenpakete und steuert eine Weiterleitung von Datenpaketen mit Nutzdaten, die an einen ersten Anschluß des als Überwachungs- und Steuerungseinheit konfigurierten Kommunikationsgeräts gerichtet sind, an einen zweiten Anschluß dieses Kommunikationsgeräts.

Das erfindungsgemäße Kommunikationsgerät ist für ein redundant betreibbares industrielles Kommunikationsnetz vorgesehen und geeignet, das ein erstes Teilnetz mit Baumtopologie sowie Nachrichtenübermittlung entsprechend einem Spannbaum-Protokoll, ein zweites Teilnetz sowie Nachrichtenübermittlung entsprechend einem Parallel- oder Ringredundanz-Protokoll und eine Mehrzahl beide Teilnetze koppelnder Kommunikationsgeräte umfaßt. Als Mittel zur Nachrichtenübermittlung innerhalb des zweiten Teilnetzes entsprechend dem Parallel- oder Ringredundanz-Protokoll sind beispielsweise eine erste und zweite Sende- und Empfangseinheit, eine Signalverarbeitungseinheit mit einer Multiplexereinheit und einer Redundanzbehandlungseinheit sowie ein mit der Signalverarbeitungseinheit verbundenes Koppelelement vorgesehen. Das Koppelelement ist vorzugsweise ein Hochgeschwindigkeitsbus, über den beispielsweise einfach angebundene Netzknoten oder redundanzfreie Teilnetze mit der Signalverarbeitungseinheit verbunden sein können. Insbesondere kann das Koppelelement ein Backplane Switch mit zugeordnetem Controller sein. Alternativ hierzu kann das Koppelelement grundsätzlich auch mittels eines Matrix-Schaltnetzes realisiert sein. Die Signalverarbeitungseinheit ist vorzugsweise mittels eines Field Programmable Gate Arrays (FPGA) realisiert.

Außerdem umfaßt das erfindungsgemäße Kommunikationsgerät Mittel zur Konfiguration eines Wurzel-Netzknotens des ersten Teilnetzes als virtueller Netzknoten, der über jeweils eine virtuelle nicht durch einen Fehler unterbrechbare Verbindung mit sämtlichen Netzknoten des zweiten Teilnetzes verbunden ist. Diese Mittel können beispielsweise durch einen dem Koppelelement zugeordneten Controller realisiert sein. Zusätzlich sind Mittel zur Konfiguration von den virtuellen Netzknoten umfassenden Topologieinformationen des ersten Teilnetzes als an einem virtuellen Anschluß empfangene Topologieinformationen des ersten Teilnetzes vorgesehen. Diese Mittel können ebenfalls durch einen dem Koppelelement zugeordneten Controller realisiert sein. Die Topologieinformationen sind erfindungsgemäß für eine Ermittlung eines Wurzel-Netzknotens als Basiselement der Baumtopologie vorgesehen. Dabei bildet der Wurzel-Netzknoten einen Ausgangspunkt für einen Aufbau schleifenfreier Verbindungen zu den übrigen Netzknoten des ersten Teilnetzes. Außerdem umfaßt das erfindungsgemäße Kommunikationsgerät Mittel zur Behandlung eines Ausfalls eines einem Netzknoten des zweiten Teilnetzes zugeordneten Kommunikationsgerätes oder einer Verbindung zwischen zwei Netzknoten des zweiten Teilnetzes ausschließlich entsprechend dem Parallel- oder Ringredundanz-Protokoll. Dabei ist eine Beibehaltung einer Konfiguration des virtuellen Netzknotens als Wurzel-Netzknoten des ersten Teilnetzes vorgesehen. Die Mittel zur Behandlung eines Ausfalls eines einem Netzknoten des zweiten Teilnetzes zugeordneten Kommunikationsgerätes oder einer Verbindung zwischen zwei Netzknoten des zweiten Teilnetzes sind vorzugsweise durch die der Signalverarbeitungseinheit zugeordnete Redundanzbehandlungseinheit gebildet. Insgesamt ermöglicht das erfindungsgemäße Kommunikationsgerät deutlich reduzierte Recovery-Zeiten nach Geräte- oder Verbindungsausfällen.

Entsprechend einer vorteilhaften Ausgestaltung des erfindungsgemäßen Kommunikationsgeräts erfolgt eine Konfiguration des virtuellen Netzknotens durch Aktivierung eines virtuellen Anschlusses an zumindest zwei Kommunikationsgeräten, die Netzknoten des zweiten Teilnetzes zugeordnet sind. Dabei kann das Kommunikationsgerät derart eingerichtet und ausgestaltet sein, daß bei Konfiguration des virtuellen Netzknotens Topologieinformationen des ersten Teilnetzes jeweils anhand eines einem Wurzel-Netzknoten zugeordneten Knotenidentifikators zunächst darauf überprüft werden, ob bereits ein durch seinen Knotenidentifikator gekennzeichneter virtueller Netzknoten innerhalb des ersten Teilnetzes vorhanden ist. Zusätzlich kann das Kommunikationsgerät derart eingerichtet und ausgestaltet sein, daß nur bei einem negativen Überprüfungsergebnis ein virtueller Anschluß an einem ersten Kommunikationsgerät aktiviert wird, das einem ersten Netzknoten des zweiten Teilnetzes zugeordnet ist. Dabei sind einer virtuellen Verbindung zwischen dem ersten Netzknoten und dem virtuellen Netzknoten verschwindende Pfadkosten zugeordnet. Insgesamt kann mit dieser Weiterbildung des erfindungsgemäßen Kommunikationsgeräts eine unerwünschte Teilung der Baumtopologie des ersten Teilnetzes verhindert werden.

Darüber hinaus kann das Kommunikationsgerät derart eingerichtet und ausgestaltet sein, daß bei einem positiven Überprüfungsergebnis Pfadkosten zwischen einem dem ersten Kommunikationsgerät zugeordneten ersten Netzknoten des zweiten Teilnetzes und dem virtuellen Netzknoten ermittelt werden, und daß nur bei verschwindenden Pfadkosten zwischen dem ersten Netzknoten und dem virtuellen Netzknoten ein virtueller Anschluß an einem zweiten Kommunikationsgerät aktiviert wird, das einem zweiten Netzknoten des zweiten Teilnetzes zugeordnet ist. Dabei sind einer virtuellen Verbindung zwischen dem zweiten Netzknoten und dem virtuellen Netzknoten verschwindende Pfadkosten zugeordnet. Zusätzlich kann das Kommunikationsgerät derart eingerichtet und ausgestaltet sein, daß bei nicht verschwindenden Pfadkosten zwischen dem ersten Netzknoten und dem virtuellen Netzknoten eine Fehlkonfiguration signalisiert wird. Dies ermöglicht eine gezielte Einleitung von Maßnahmen für eine zügige Behebung einer Fehlkonfiguration. Das Kommunikationsgerät kann entsprechend einer alternativen Ausführungsform derart ausgestaltet und eingerichtet sein, daß bei Konfiguration des virtuellen Netzknotens überprüft wird, ob sämtliche mit dem virtuellen Netzknoten verknüpften Kommunikationsgeräte innerhalb des zweiten Teilnetzes miteinander verbunden sind, und daß bei einem negativen Überprüfungsergebnis eine Fehlkonfiguration signalisiert wird.

Entsprechend einer vorteilhaften Weiterbildung umfaßt das erfindungsgemäße Kommunikationsgerät Mittel zum Austauschen von Nachrichten mit Topologieinformationen des ersten Teilnetzes mit Netzknoten des zweiten Teilnetzes zugeordneten weiteren Kommunikationsgeräten entsprechend dem Parallel- oder Ringredundanz-Protokoll. Diese Mittel können beispielsweise durch die erste und zweite Sende- und Empfangseinheit, die Signalverarbeitungseinheit, das Koppelelement und einen der Signalverarbeitungseinheit zugeordneten Protokoll-Wrapper realisiert sein. Zusätzlich sind vorzugsweise Mittel zum Vergleichen von ausgetauschten Nachrichten mit Topologieinformationen des ersten Teilnetzes mit lokal vorliegenden Topologieinformationen des ersten Teilnetzes und zum Ermitteln von resultierenden Topologieinformationen des ersten Teilnetzes in Abhängigkeit von einem Vergleichsergebnis vorgesehen. Diese Mittel können beispielsweise durch die Signalverarbeitungseinheit realisiert sein.

Darüber hinaus kann das erfindungsgemäße Kommunikationsgerät entsprechend einer bevorzugten Weiterbildung Mittel zu seiner Konfigurationsanpassung hinsichtlich geschlossener bzw. geöffneter Verbindungen zum ersten Teilnetz anhand der ermittelten resultierenden Topologieinformationen des ersten Teilnetzes umfassen. Diese Mittel können beispielsweise durch einen Controller des Koppelelements realisiert sein. Vorzugsweise ist das Kommunikationsgerät für eine Nachrichtübermittlung innerhalb des zweiten Teilnetzes ausschließlich entsprechend dem Parallel- oder Ringredundanz-Protokoll eingerichtet. Daher können das Spannbaum-Protokoll und das Parallel- oder Ringredundanz-Protokoll im jeweiligen Teilnetz im wesentlichen entkoppelt voneinander angewendet werden.

Die vorliegende Erfindung wird nachfolgend an einem Ausführungsbeispiel anhand der Zeichnung näher erläutert. Es zeigt
- Figur 1: ein redundant betreibbares industrielles Kommunikationsnetz, das ein erstes Teilnetz mit Baumtopologie und ein zweites Teilnetz mit Ringtopologie umfaßt, in einem fehlerfreien Verbindungszustand,
- Figur 2: das Kommunikationsnetz gemäß Figur 1 in einem Zustand mit einem Verbindungsfehler im zweiten Teilnetz,
- Figur 3: das Kommunikationsnetz gemäß Figur 1 in einem Zustand mit einem Verbindungsfehler im ersten Teilnetz,
- Figur 4: ein Kommunikationsgerät, das einem Netzknoten des zweiten Teilnetzes zugeordnet ist,
- Figur 5: ein Kommunikationsgerät, das einem Netzknoten eines Teilnetzes zugeordnet ist, in dem ein Parallel-Redundanzprotokoll verwendet wird.

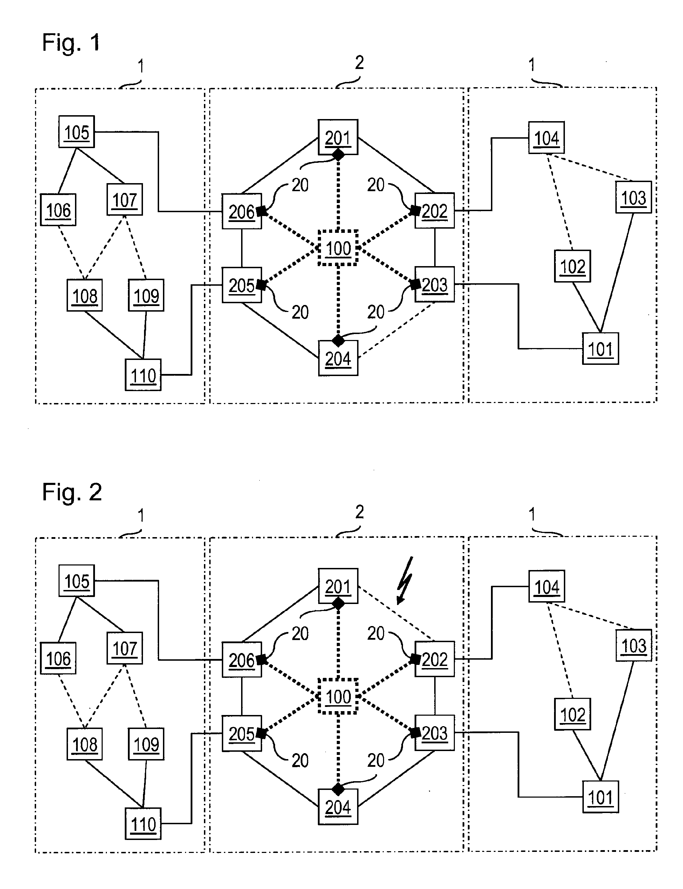

Das in Figur 1 dargestellte industrielle Kommunikationsnetz umfaßt ein erstes Teilnetz 1 mit Baumtopologie sowie Nachrichtenübermittlung entsprechend einem Spannbaum-Protokoll und ein zweites Teilnetz 2 mit Ringtopologie sowie Nachrichtenübermittlung entsprechend einem Ringredundanz-Protokoll. Nachrichten zwischen Netzknoten des zweiten Teilnetzes 2 zugeordneten Kommunikationsgeräten 201-206 werden ausschließlich entsprechend dem Ringredundanz-Protokoll übermittelt. Grundsätzlich könnte im zweiten Teilnetz 2 anstelle des Ringredundanz-Protokolls auch ein Parallelredundanz-Protokoll verwendet werden. Nachfolgende Ausführungen gelten für diesen Fall gleichermaßen.

Das erste 1 und zweite Teilnetz 2 sind über eine Mehrzahl von Kommunikationsgeräten 101, 104, 105, 110, 202, 203, 205, 206 miteinander gekoppelt. Im vorliegenden Ausführungsbeispiel sind alle Verbindungen zwischen den Kommunikationsgeräten 101, 104, 105, 110, 202, 203, 205, 206 aktiviert. Deaktivierte Verbindungen sind in den Figuren durch gestrichelte Linien repräsentiert, während durchgezogene Linien aktivierte Verbindungen symbolisieren. Dies gilt für beide Teilnetze 1, 2. Netzknoten des ersten Teilnetzes 1 zugeordnete Kommunikationsgeräte 101-110 tauschen zur Bildung einer Baumtopologie untereinander Nachrichten mit Topologieinformationen aus und ermitteln anhand der ausgetauschten Topologieinformationen einen Wurzel-Netzknoten als Basiselement einer Baumtopologie. Das Spannbaum-Protokoll ist im vorliegenden Ausführungsbeispiel das Rapid Spanning Tree Protocol. Nachstehende Ausführungen gelten aber gleichermaßen für das Spanning Tree Protocol, das Multiple Spanning Tree Protocol oder vergleichbare Spannbaum-Protokolle.

Als Wurzel-Netzknoten des ersten Teilnetzes 1 wird erfindungsgemäß ein virtueller Netzknoten konfiguriert, dem eine virtuelle Root Bridge 100 zugeordnet ist, die über jeweils eine virtuelle nicht durch einen Fehler unterbrechbare Verbindung mit sämtlichen Kommunikationsgeräten 201-206 des zweiten Teilnetzes 2 verbunden ist. Dies ist in Figur 1 durch gestrichelte fette Linien zwischen der virtuellen Root Bridge 100 am virtuellen Wurzel-Netzknoten des ersten Teilnetzes 1 und den Kommunikationsgeräten 201-206 an den Netzknoten des zweiten Teilnetzes 2 dargestellt.

Der virtuelle Wurzel-Netzknoten wird durch Aktivierung jeweils eines virtuellen Anschlusses 20 an zumindest zwei Kommunikationsgeräten 201-206 konfiguriert, die Netzknoten des zweiten Teilnetzes 2 zugeordnet sind. Als Bridge ID für eine Anwendung des Spannbaum-Protokolls wird dem virtuellen Wurzel-Netzknoten des ersten Teilnetzes 1 im vorliegenden Ausführungsbeispiel entsprechend IEEE 802.1D der Wert 0 zugewiesen, so daß er von allen Netzknoten 100-110 des ersten Teilnetzes 1 stets die niedrigste Bridge ID aufweist und damit als Wurzel-Netzknoten fest vorgegeben ist. Allgemein weist der Wurzel-Netzknoten den am höchsten priorisierten Wert als Bridge ID auf. Beim Spannbaum-Protokoll entsprechend IEEE 802.1D wird der am höchsten priorisierte Wert durch den Wert 0 repräsentiert, wobei der Netzknoten mit der niedrigsten Bridge ID für eine Anwendung des Spannbaum-Protokolls am höchsten priorisiert ist.

Die unter den Kommunikationsgeräten 101-110 des ersten Teilnetzes 1 ausgetauschten Nachrichten mit Topologieinformationen des ersten Teilnetzes 1 können Bridge Protocol Data Units (BPDU) sein, mittels derer die Kommunikationsgeräte 101-110 des ersten Teilnetzes 1 ihre Portzustände konfigurieren. Durch eine Konfiguration der Portzustände werden insbesondere Verbindungen zwischen Netzknoten aktiviert bzw. deaktiviert. Die Topologieinformationen des ersten Teilnetzes 1 umfassen insbesondere Angaben zu bestehenden Verbindungen zwischen Netzknoten des ersten Teilnetzes 1 und deren Pfadkosten. Dies gilt auch für Transitverbindungen durch das zweite Teilnetz 2 mit Ringtopologie. Anhand einer Ermittlung minimaler Pfadkosten zum virtuellen Wurzel-Netzknoten bauen die Kommunikationsgeräte 101-110 des ersten Teilnetzes autonom-interagierend vom virtuellen Wurzel-Netzknoten ausgehende schleifenfreie Verbindungen zu den übrigen Netzknoten des ersten Teilnetzes 1 auf. Nähere Einzelheiten hierzu sind in bezug auf das Rapid Spanning Tree Protocol beispielsweise IEEE 802.1D-2004, Clause 17 "Rapid Spanning Tree Protocol (RSTP)" zu entnehmen.

Bei Konfiguration des virtuellen Wurzel-Netzknotens werden im vorliegenden Ausführungsbeispiel Nachrichten mit Topologieinformationen des ersten Teilnetzes 1 jeweils anhand einer dort angegebenen Bridge ID eines Wurzel-Netzknotens des ersten Teilnetzes 1 zunächst darauf überprüft, ob bereits ein durch seine Bridge ID gekennzeichneter virtueller Wurzel-Netzknoten innerhalb des ersten Teilnetzes 1 vorhanden ist. Nur bei einem negativen Überprüfungsergebnis wird ein virtueller Anschluß 20 an einem ersten Kommunikationsgerät 201-206 aktiviert, das einem ersten Netzknoten des zweiten Teilnetzes 2 zugeordnet ist. Dabei wird einer virtuellen Verbindung zwischen dem ersten Netzknoten und dem virtuellen Wurzel-Netzknoten als Pfadkosten der Wert 0 zugeordnet.

Bei einem positiven Überprüfungsergebnis - also bei einem bereits grundsätzlich vorhandenen virtuellen Wurzel-Netzknoten - werden im vorliegenden Ausführungsbeispiel Pfadkosten zwischen einem dem ersten Kommunikationsgerät 201-206 zugeordneten ersten Netzknoten des zweiten Teilnetzes 2 und dem virtuellen Wurzel-Netzknoten ermittelt. Nur bei Pfadkosten mit dem Wert 0 zwischen dem ersten Netzknoten des zweiten Teilnetzes 2 und dem virtuellen Wurzel-Netzknoten wird ein virtueller Anschluß 20 an einem zweiten Kommunikationsgerät 201-206 aktiviert, das einem zweiten Netzknoten des zweiten Teilnetzes 2 zugeordnet ist. Dabei wird einer virtuellen Verbindung zwischen dem zweiten Netzknoten und dem virtuellen Wurzel-Netzknoten als Pfadkosten der Wert 0 zugeordnet. Werden nicht verschwindende Pfadkosten zwischen dem ersten Netzknoten und dem virtuellen Wurzel-Netzknoten ermittelt, wird eine Fehlkonfiguration signalisiert.

Eine Aktivierung eines virtuellen Anschlusses 20 für den virtuellen Wurzel-Netzknoten an einem dritten oder weiteren Kommunikationsgerät 201-206 des zweiten Teilnetzes 2 erfolgt analog zur Aktivierung des virtuellen Anschlusses 20 am zweiten Kommunikationsgerät 201-206. Dabei wird insbesondere überprüft, ob die Pfadkosten zwischen dem virtuellen Wurzel-Netzknoten und Netzknoten des zweiten Teilnetzes 2 mit bereits für den virtuellen Wurzel-Netzknoten aktivieren virtuellen Anschlüssen 20 den Wert 0 aufweisen. Trifft dies für einen Netzknoten des zweiten Teilnetzes 2 nicht zu, wird ebenfalls eine Fehlkonfiguration signalisiert.

Alternativ zur vorangehend beschriebenen Vorgehensweise kann der virtuelle Wurzel-Netzknoten auch konfiguriert werden, indem bei einer Aktivierung eines für die virtuelle Root Bridge 100 vorgesehenen virtuellen Anschlusses 20 an einem Kommunikationsgerät 201-206 überprüft wird, ob sämtliche mit der virtuellen Root Bridge 100 verknüpften Kommunikationsgeräte innerhalb desselben Teilnetzes miteinander verbunden sind. Eine solche Überprüfung kann beispielsweise anhand von Topologieinformationen, z.B. entsprechend Intermediate System to Intermediate System Protocol (IS-IS), anhand einer Nachbarschaftserkennung, z.B. mittels Link Layer Discovery Protocol (LLDP), oder anhand einer übereinstimmenden Subnetzwerk-Kennzeichnung, z.B. entsprechend IEC 62439 Net-ID, erfolgen.

An den virtuellen Anschlüssen 20 der den Netzknoten des zweiten Teilnetzes 2 zugeordneten Kommunikationsgeräte 201-206 werden Nachrichten mit den virtuellen Wurzel-Netzknoten umfassenden Topologieinformationen des ersten Teilnetzes 1, beispielsweise Bridge Protocol Data Units oder jeweils einen Port Priority Vector umfassende Nachrichten, als empfangene Nachrichten konfiguriert. Darüber hinaus wird ein Ausfall eines einem Netzknoten des zweiten Teilnetzes zugeordneten Kommunikationsgerätes 201-206 oder einer Verbindung zwischen zwei Netzknoten des zweiten Teilnetzes 2 ausschließlich entsprechend dem Ringredundanz-Protokoll behandelt wird. Dabei wird eine Konfiguration des virtuellen Wurzel-Netzknotens als Wurzel-Netzknoten des ersten Teilnetzes 1 beibehalten.

Die den Netzknoten des zweiten Teilnetzes 2 zugeordneten Kommunikationsgeräte 201-206 tauschen untereinander Nachrichten mit Topologieinformationen des ersten Teilnetzes 1 entsprechend dem Ringredundanz-Protokoll aus und vergleichen diese mit lokal vorliegenden Topologieinformationen des ersten Teilnetzes. Die zwischen den Kommunikationsgeräten 201-206 des zweiten Teilnetzes 2 ausgetauschten Nachrichten mit Topologieinformationen des ersten Teilnetzes 1 umfassen im vorliegenden Ausführungsbeispiel jeweils einen Port Priority Vector, aus dessen Abgleich sämtliche Kommunikationsgeräte 201-206 in Abhängigkeit von einem Vergleichsergebnis einen Root Priority Vector als resultierende Topologieinformationen des ersten Teilnetzes 1 einheitlich ermitteln. Anhand der ermittelten resultierenden Topologieinformationen des ersten Teilnetzes 1 passen die den Netzknoten des zweiten Teilnetzes 2 zugeordneten Kommunikationsgeräte 201-206 ihre Konfiguration hinsichtlich geschlossener bzw. geöffneter Verbindungen zum ersten Teilnetz 1 an. Die den Netzknoten des ersten 1 und zweiten Teilnetzes 2 zugeordneten Kommunikationsgeräte 101-110, 201-206 sind im vorliegenden Ausführungsbeispiel Switches oder Bridges.

Die durch die Kommunikationsgeräte 201-206 des zweiten Teilnetzes 2 einheitlich ermittelten resultierenden Topologieinformationen des ersten Teilnetzes 1 werden auch den Kommunikationsgeräten 101-110 des ersten Teilnetzes 1 zur Anwendung des Spannbaum-Protokolls im ersten Teilnetz 1 bereitgestellt. Damit kann das zweite Teilnetz 2 für eine Anwendung des Spannbaum-Protokolls im ersten Teilnetz 1 als eine von der virtuellen Root Bridge 100 ausgehende sternförmige Erweiterung behandelt werden. Daher sind die Transitverbindungen durch das zweite Teilnetz 2 für die Kommunikationsgeräte 101-110 des ersten Teilnetzes 1 transparent.

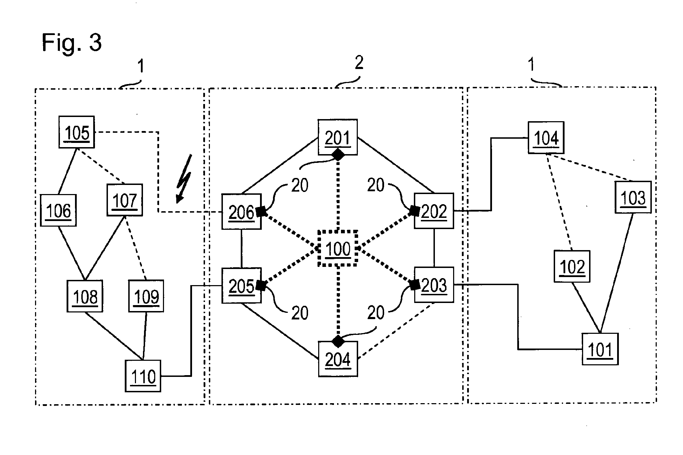

In einem fehlerfreien Verbindungszustand sind zur Vermeidung von Schleifenverbindungen entsprechend Figur 1 die Verbindungen zwischen den Kommunikationsgeräten 102 und 104, 103 und 104, 203 und 204, 106 und 108, 107 und 108 sowie 107 und 109 deaktiviert. Bei einem in Figur 2 dargestellten Verbindungsfehler im zweiten Teilnetz 2 zwischen den Kommunikationsgeräten 201 und 202 wird entsprechend dem im zweiten Teilnetz 2 angewendeten Ringredundanz-Protokoll die Verbindung zwischen den Kommunikationsgeräten 203 und 204 aktiviert, ohne daß dies Auswirkungen auf das erste Teilnetz 1 hat. In entsprechender Weise hat auch ein in Figur 3 dargestellter Verbindungsfehler zwischen den Kommunikationsgeräten 206 und 105 keine weitreichenden Konsequenzen auf das zweite Teilnetz 2. Zur Fehlerbehandlung bleibt nämlich lediglich entsprechend dem im ersten Teilnetz 1 verwendeten Spannbaum-Protokoll die Verbindung zwischen den Kommunikationsgeräten 205 und 110 aktiviert, ohne daß dies Auswirkungen auf die übrigen Kommunikationsgeräte 201-204, 206 hat. Weitere Fehlerbehandlungsmaßnahmen, nämlich eine Aktivierung der Verbindungen zwischen den Kommunikationsgeräten 106 und 108 sowie 107 und 108 und eine Deaktivierung der Verbindung zwischen den Kommunikationsgeräten 105 und 107, bleiben auf das erste Teilnetz 1 beschränkt. Eine Fehlerbehandlung kann also grundsätzlich immer im direkt von einem Fehler oder einer Störung betroffenen Teilnetz auf Basis eines dort verwendeten Kommunikationsprotokolls erfolgen.

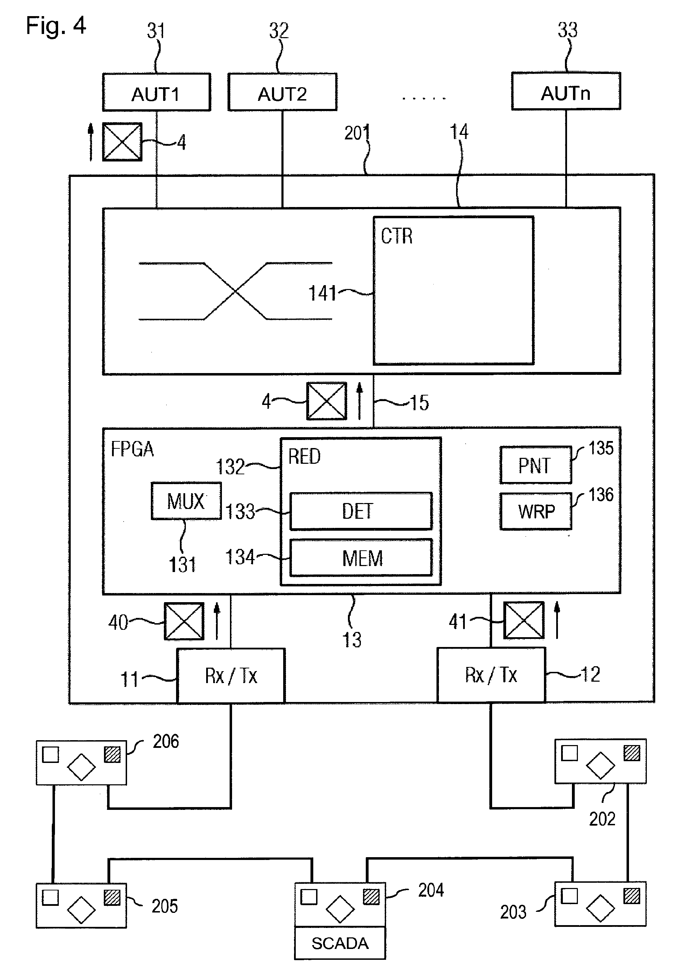

In Figur 4 ist ein Kommunikationsgerät 201, das einem Netzknoten des zweiten Teilnetzes 2 zugeordnet ist und in einer Ringstruktur mit weiteren Kommunikationsgeräten 202-206 verbunden ist, näher dargestellt. Grundsätzlich können auch die übrigen Kommunikationsgeräte 202-206 des zweiten Teilnetzes 2 identisch aufgebaut sein. Ein Kommunikationsgerät 204 kann beispielsweise einem SCADA-System (supervisory control and data acquisition) eines industriellen Fertigungs- oder Prozeßautomatisierungssystems zugeordnet sein.

Als Mittel zur Nachrichtenübermittlung innerhalb des zweiten Teilnetzes umfaßt das Kommunikationsgerät 201 zumindest eine erste 11 und zweite Sende- und Empfangseinheit 12, eine Signalverarbeitungseinheit 13 mit einer Multiplexereinheit 131 und einer Redundanzbehandlungseinheit 132 sowie ein mit der Signalverarbeitungseinheit 13 verbundenes Koppelelement 14. Beide Sende- und Empfangseinheiten 11, 12 können eine identische Netzadresse bzw. einen identischen MAC-Geräteidentifikator aufweisen. Bei Verwendung einer PC-basierten Lösung mit zwei Kommunikationsnetzerweiterungskarten können diese unterschiedliche MAC-Adressen aufweisen. In diesem Fall wird eine der beiden MAC-Adressen von beiden Erweiterungskarten einheitlich für Sende- bzw. Empfangsvorgänge als gemeinsame MAC-Adresse verwendet.

Die Multiplexereinheit 131 dient zur parallelen Weiterleitung zu sendender Datenpakete an beide Sendeeinheiten 11, 12, während die Redundanzbehandlungseinheit 132 zur Verarbeitung von beiden Empfangseinheiten 11, 12 empfangener Datenpakete 40, 41 vorgesehen ist. Die Redundanzbehandlungseinheit 132 umfaßt außerdem eine Filtereinheit 133, die für eine Detektion empfangener redundanter Datenpakete eingerichtet ist. Insbesondere dient die Redundanzbehandlungseinheit 132 als Mittel zur Behandlung eines Ausfalls eines einem Netzknoten des zweiten Teilnetzes zugeordneten Kommunikationsgerätes oder einer Verbindung zwischen zwei Netzknoten des zweiten Teilnetzes. Im vorliegenden Ausführungsbeispiel erfolgt eine Behandlung eines solchen Ausfalls ausschließlich entsprechend dem Ringredundanz-Protokoll.

Die Signalverarbeitungseinheit ist im vorliegenden Ausführungsbeispiel mittels eines Field Programmable Gate Arrays (FPGA) realisiert. Das Koppelelement 14 ist ein Backplane Switch mit zugeordnetem Controller 141 und verbindet mehrere Automatisierungsgeräte 31-33 mit der Signalverarbeitungseinheit 13. Des weiteren ist das Koppelelement 14 über jeweils einen Interlink-Anschluß mit den Automatisierungsgeräten 31-33 verbunden. Die Signalverarbeitungseinheit 13 weist eine Speichereinheit 135 auf, in der eine Tabelle (proxy node table) mit Angaben zu sämtlichen mit dem Koppelelement 14 verbundenen Automatisierungsgeräten 31-33 gespeichert ist.

Als Mittel zum Austauschen von Nachrichten mit Topologieinformationen des ersten Teilnetzes 1 entsprechend dem Ringredundanz-Protokoll umfaßt das in Figur 4 dargestellte Kommunikationsgerät 201 die erste 11 und zweite Sende- und Empfangseinheit 12, die Signalverarbeitungseinheit 13, das Koppelelement 14 und einen der Signalverarbeitungseinheit zugeordneten Protokoll-Wrapper 136. Darüber hinaus ist die Signalverarbeitungseinheit 13 zum Vergleichen von ausgetauschten Nachrichten mit Topologieinformationen des ersten Teilnetzes 1 mit lokal im Kommunikationsgerät 201 vorliegenden Topologieinformationen vorgesehen. Außerdem ist Signalverarbeitungseinheit 13 im vorliegenden Ausführungsbeispiel für Ermitteln von resultierenden Topologieinformationen des ersten Teilnetzes 1 in Abhängigkeit von einem Vergleichsergebnis ausgestaltet und eingerichtet.

Darüber hinaus ist der Controller 141 des Koppelelements 14 vorteilhafterweise zur Konfigurationsanpassung des Kommunikationsgeräts 201 hinsichtlich geschlossener bzw. geöffneter Verbindungen zum ersten Teilnetz 1 vorgesehen. Die Konfigurationsanpassung erfolgt dabei anhand der ermittelten resultierenden Topologieinformationen des ersten Teilnetzes 1. Darüber hinaus dient der Controller 141 des Koppelelements 14 zur Konfiguration des virtuellen Wurzel-Netzknotens. Zusätzlich ist der Controller 141 zur Konfiguration von den virtuellen Wurzel-Netzknoten umfassenden Topologieinformationen als an einem virtuellen Anschluß 20 empfangene Topologieinformationen des ersten Teilnetzes 1 vorgesehen.

Das Kommunikationsgerät 201 ist vorzugsweise für eine Nachrichtenübermittlung sowohl entsprechend dem High-availability Seamless Redundancy-Protokoll als auch entsprechend dem Media Redundancy Protocol eingerichtet. Für eine Nachrichtenübermittlung entsprechend dem High-availability Seamless Redundancy-Protokoll umfaßt die Redundanzbehandlungseinheit 132 eine Speichereinheit 134, die für eine Speicherung von Sequenznummern bereits fehlerfrei empfangener Nachrichten eingerichtet ist. Damit kann die Redundanzbehandlungseinheit 13 bei Empfang einer neuen Nachricht deren Sequenznummer auf Übereinstimmung mit einer bereits gespeicherten Sequenznummer überprüfen und ggf. redundante Nachrichten verwerfen, die durch eine einheitliche Sequenznummer gekennzeichnet und dementsprechend detektierbar sind.

Die Merkmale der vorangehend beschriebenen Ausführungsbeispiele können sowohl einzeln als auch in beschriebener Kombination miteinander realisiert sein. Insbesondere ist eine Anwendung der vorliegenden Erfindung nicht auf ein zweites Teilnetz beschränkt, in dem ein Ringredundanz-Protokoll verwendet wird, sondern obige Ausführungen gelten in analoger Weise auch für ein zweites Teilnetz, in dem ein Parallelredundanz-Protokoll wie das Parallel Redundancy Protocol angewendet wird.

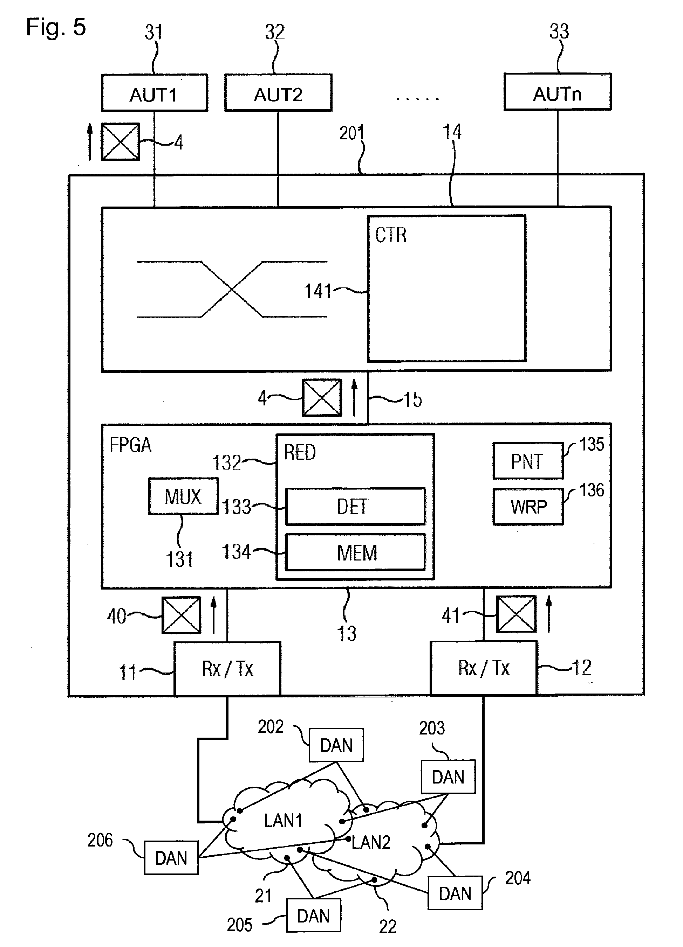

In Figur 5 ist beispielhaft ein Kommunikationsgerät 201 für ein zweites Teilnetz dargestellt, in dem das Parallel Redundancy Protocol verwendet wird. In diesem Fall umfaßt das zweite Teilnetz 2 beispielsweise zwei zueinander redundante lokale Netze 21, 22, mit denen jeweils eine Sende- und Empfangseinheit 11, 12 des in Figur 5 dargestellten Kommunikationsgeräts 201 verbunden ist, das im übrigen entsprechende Komponenten wie das in Figur 4 dargestellte Kommunikationsgerät 201 umfaßt. Hierzu zählen insbesondere eine Signalverarbeitungseinheit 13 mit Multiplexereinheit 131, Redundanzbehandlungseinheit 132, Speichereinheit 135 für eine proxy node table und Protokoll-Wrapper 135 sowie ein Koppelelement 14 mit einem zugeordneten Controller. Hinsichtlich ihrer Funktionalität entsprechen diese Komponenten übertragen auf das Parallel Redundancy Protocol denen des in Figur 4 dargestellten Kommunikationsgeräts 201. An die beiden zueinander redundanten lokalen Netze 21, 22 sind neben dem Kommunikationsgerät 201 noch weitere Kommunikationsgeräte 202-206 doppelt angebunden. Diese Kommunikationsgeräte 202-206 können hinsichtlich Aufbau und Funktionalität mit dem Kommunikationsgerät 201 identisch sein.

## Patentansprüche

1. Verfahren zur Nachrichtenübermittlung in einem redundant betreibbaren industriellen Kommunikationsnetz, bei dem
- Nachrichten in einem ersten Teilnetz mit Baumtopologie entsprechend einem Spannbaum-Protokoll übermittelt werden, wobei Netzknoten des ersten Teilnetzes zugeordnete Kommunikationsgeräte zur Bildung einer Baumtopologie untereinander Nachrichten mit Topologieinformationen austauschen und anhand der ausgetauschten Topologieinformationen ein Wurzel-Netzknoten als Basiselement einer Baumtopologie durch die den Netzknoten des ersten Teilnetzes zugeordneten Kommunikationsgeräte ermittelt wird, und wobei vom Wurzel-Netzknoten ausgehend schleifenfreie Verbindungen zu den übrigen Netzknoten des ersten Teilnetzes aufgebaut werden,
- Nachrichten in einem zweiten Teilnetz entsprechend einem Parallel- oder Ringredundanz-Protokoll übermittelt werden,
- das erste und zweite Teilnetz über eine Mehrzahl von Kommunikationsgeräten miteinander gekoppelt sind,
- als Wurzel-Netzknoten des ersten Teilnetzes ein virtueller Netzknoten konfiguriert wird, der über jeweils eine virtuelle nicht durch einen Fehler unterbrechbare Verbindung mit sämtlichen Netzknoten des zweiten Teilnetzes verbunden ist,
- den virtuellen Netzknoten umfassende Topologieinformationen des ersten Teilnetzes an jeweils einem virtuellen Anschluß von den Netzknoten des zweiten Teilnetzes zugeordneten Kommunikationsgeräten als empfangene Topologieinformationen des ersten Teilnetzes konfiguriert werden,
- ein Ausfall eines einem Netzknoten des zweiten Teilnetzes zugeordneten Kommunikationsgerätes oder einer Verbindung zwischen zwei Netzknoten des zweiten Teilnetzes ausschließlich entsprechend dem Parallel- oder Ringredundanz-Protokoll behandelt wird, wobei eine Konfiguration des virtuellen Netzknotens als Wurzel-Netzknoten des ersten Teilnetzes beibehalten wird.

2. Verfahren nach Anspruch 1,
bei dem der virtuelle Netzknoten durch Aktivierung jeweils eines virtuellen Anschlusses an zumindest zwei Kommunikationsgeräten konfiguriert wird, die Netzknoten des zweiten Teilnetzes zugeordnet sind.

3. Verfahren nach Anspruch 2,
bei dem bei Konfiguration des virtuellen Netzknotens Topologieinformationen des ersten Teilnetzes jeweils anhand eines einem Wurzel-Netzknoten zugeordneten Knotenidentifikators zunächst darauf überprüft werden, ob bereits ein durch seinen Knotenidentifikator gekennzeichneter virtueller Netzknoten innerhalb des ersten Teilnetzes vorhanden ist, und bei dem nur bei einem negativen Überprüfungsergebnis ein virtueller Anschluß an einem ersten Kommunikationsgerät aktiviert wird, das einem ersten Netzknoten des zweiten Teilnetzes zugeordnet ist, wobei einer virtuellen Verbindung zwischen dem ersten Netzknoten und dem virtuellen Netzknoten verschwindende Pfadkosten zugeordnet werden.

4. Verfahren nach Anspruch 3,
bei dem bei einem positiven Überprüfungsergebnis Pfadkosten zwischen einem dem ersten Kommunikationsgerät zugeordneten ersten Netzknoten des zweiten Teilnetzes und dem virtuellen Netzknoten ermittelt werden, und bei dem nur bei verschwindenden Pfadkosten zwischen dem ersten Netzknoten und dem virtuellen Netzknoten ein virtueller Anschluß an einem zweiten Kommunikationsgerät aktiviert wird, das einem zweiten Netzknoten des zweiten Teilnetzes zugeordnet ist, wobei einer virtuellen Verbindung zwischen dem zweiten Netzknoten und dem virtuellen Netzknoten verschwindende Pfadkosten zugeordnet werden.

5. Verfahren nach Anspruch 4,
bei dem bei nicht verschwindenden Pfadkosten zwischen dem ersten Netzknoten und dem virtuellen Netzknoten eine Fehlkonfiguration signalisiert wird.

6. Verfahren nach einem der Ansprüche 1 oder 2,
bei dem bei Konfiguration des virtuellen Netzknotens überprüft wird, ob sämtliche mit dem virtuellen Netzknoten verknüpften Kommunikationsgeräte innerhalb des zweiten Teilnetzes miteinander verbunden sind, und bei dem bei einem negativen Überprüfungsergebnis eine Fehlkonfiguration signalisiert wird.

7. Verfahren nach einem der Ansprüche 1 bis 6,
bei dem die den Netzknoten des zweiten Teilnetzes zugeordneten Kommunikationsgeräte untereinander Nachrichten mit Topologieinformationen des ersten Teilnetzes untereinander entsprechend dem Parallel- oder Ringredundanz-Protokoll austauschen, mit lokal vorliegenden Topologieinformationen des ersten Teilnetzes vergleichen und in Abhängigkeit von einem Vergleichsergebnis resultierende Topologieinformationen des ersten Teilnetzes ermitteln.

8. Verfahren nach Anspruch 7,
bei dem die den Netzknoten des zweiten Teilnetzes zugeordneten Kommunikationsgeräte anhand der ermittelten resultierenden Topologieinformationen des ersten Teilnetzes ihre Konfiguration hinsichtlich geschlossener und/oder geöffneter Verbindungen zum ersten Teilnetz anpassen.

9. Verfahren nach einem der Ansprüche 1 bis 8,
bei dem die Topologieinformationen des ersten Teilnetzes Angaben zu bestehenden Verbindungen zwischen Netzknoten des ersten Teilnetzes umfassen, und bei dem vom Wurzel-Netzknoten ausgehende schleifenfreie Verbindungen zu den übrigen Netzknoten des ersten Teilnetzes anhand einer Ermittlung minimaler Pfadkosten zum Wurzel-Netzknoten aufgebaut werden.

10. Verfahren nach einem der Ansprüche 1 bis 9,
bei dem Nachrichten zwischen den Netzknoten des zweiten Teilnetzes zugeordneten Kommunikationsgeräten ausschließlich entsprechend dem Parallel- oder Ringredundanz-Protokoll übermittelt werden.

11. Verfahren nach einem der Ansprüche 1 bis 10,
bei dem die resultierende Topologieinformationen des ersten Teilnetzes durch sämtliche den Netzknoten des zweiten Teilnetzes zugeordnete Kommunikationsgeräte einheitlich ermittelt werden.

12. Verfahren nach Anspruch 11,
bei dem durch die den Netzknoten des zweiten Teilnetzes zugeordneten Kommunikationsgeräte einheitliche resultierende Topologieinformationen zur Anwendung des Spannbaum-Protokolls im ersten Teilnetz bereitgestellt werden.

13. Verfahren nach einem der Ansprüche 1 bis 12,
bei dem das Spannbaum-Protokoll das Spanning Tree Protocol, Rapid Spanning Tree Protocol oder Multiple Spanning Tree Protocol ist.

14. Verfahren nach Anspruch 13,
bei dem die Nachrichten mit Topologieinformationen des ersten Teilnetzes Bridge Protocol Data Units sind.

15. Verfahren nach Anspruch 13 oder 14,
bei dem die Nachrichten mit Topologieinformationen des ersten Teilnetzes jeweils einen Port Priority Vector umfassen, der unter den Netzknoten des zweiten Teilnetzes zugeordneten Kommunikationsgeräten ausgetauscht und abgeglichen wird.

16. Verfahren nach einem der Ansprüche 1 bis 15,
bei dem die den Netzknoten des ersten und/oder zweiten Teilnetzes zugeordneten Kommunikationsgeräte Switches oder Bridges sind.

17. Verfahren nach einem der Ansprüche 1 bis 16,
bei dem das Parallel- oder Ringredundanz-Protokoll das Parallel Redundancy Protocol, High-availability Seamless Redundancy-Protokoll oder Media Redundancy Protocol ist.

18. Kommunikationsgerät für ein redundant betreibbares industrielles Kommunikationsnetz, das ein erstes Teilnetz mit Baumtopologie sowie Nachrichtenübermittlung entsprechend einem Spannbaum-Protokoll, ein zweites Teilnetz mit Nachrichtenübermittlung entsprechend einem Parallel- oder Ringredundanz-Protokoll und eine Mehrzahl beide Teilnetze koppelnder Kommunikationsgeräte umfaßt, mit
- Mitteln zur Nachrichtenübermittlung innerhalb des zweiten Teilnetzes entsprechend dem Parallel- oder Ringredundanz-Protokoll,
- Mitteln zur Konfiguration eines Wurzel-Netzknotens des ersten Teilnetzes als virtueller Netzknoten, der über jeweils eine virtuelle nicht durch einen Fehler unterbrechbare Verbindung mit sämtlichen Netzknoten des zweiten Teilnetzes verbunden ist,
- Mitteln zur Konfiguration von den virtuellen Netzknoten umfassenden Topologieinformationen des ersten Teilnetzes als an einem virtuellen Anschluß empfangene Topologieinformationen des ersten Teilnetzes, wobei die Topologieinformationen für eine Ermittlung eines Wurzel-Netzknotens als Basiselement der Baumtopologie vorgesehen sind, und wobei der Wurzel-Netzknoten einen Ausgangspunkt für einen Aufbau schleifenfreier Verbindungen zu den übrigen Netzknoten des ersten Teilnetzes bildet,
- Mitteln zur Behandlung eines Ausfalls eines einem Netzknoten des zweiten Teilnetzes zugeordneten Kommunikationsgerätes oder einer Verbindung zwischen zwei Netzknoten des zweiten Teilnetzes ausschließlich entsprechend dem Parallel- oder Ringredundanz-Protokoll, wobei eine Beibehaltung einer Konfiguration des virtuellen Netzknotens als Wurzel-Netzknoten des ersten Teilnetzes vorgesehen ist.

19. Kommunikationsgerät nach Anspruch 18,
bei dem eine Konfiguration des virtuellen Netzknotens durch Aktivierung eines virtuellen Anschlusses an zumindest zwei Kommunikationsgeräten erfolgt, die Netzknoten des zweiten Teilnetzes zugeordnet sind.

20. Kommunikationsgerät nach Anspruch 19,
bei dem das Kommunikationsgerät derart eingerichtet und ausgestaltet ist, daß bei Konfiguration des virtuellen Netzknotens Topologieinformationen des ersten Teilnetzes jeweils anhand eines einem Wurzel-Netzknoten zugeordneten Knotenidentifikators zunächst darauf überprüft werden, ob bereits ein durch seinen Knotenidentifikator gekennzeichneter virtueller Netzknoten innerhalb des ersten Teilnetzes vorhanden ist, und daß nur bei einem negativen Überprüfungsergebnis ein virtueller Anschluß an einem ersten Kommunikationsgerät aktiviert wird, das einem ersten Netzknoten des zweiten Teilnetzes zugeordnet ist, wobei einer virtuellen Verbindung zwischen dem ersten Netzknoten und dem virtuellen Netzknoten verschwindende Pfadkosten zugeordnet werden.

21. Kommunikationsgerät nach Anspruch 20,
bei dem das Kommunikationsgerät derart eingerichtet und ausgestaltet ist, daß bei einem positiven Überprüfungsergebnis Pfadkosten zwischen einem dem ersten Kommunikationsgerät zugeordneten ersten Netzknoten des zweiten Teilnetzes und dem virtuellen Netzknoten ermittelt werden, und daß nur bei verschwindenden Pfadkosten zwischen dem ersten Netzknoten und dem virtuellen Netzknoten ein virtueller Anschluß an einem zweiten Kommunikationsgerät aktiviert wird, das einem zweiten Netzknoten des zweiten Teilnetzes zugeordnet ist, wobei einer virtuellen Verbindung zwischen dem zweiten Netzknoten und dem virtuellen Netzknoten verschwindende Pfadkosten zugeordnet werden.

22. Kommunikationsgerät nach Anspruch 21,
bei dem das Kommunikationsgerät derart eingerichtet und ausgestaltet ist, daß bei nicht verschwindenden Pfadkosten zwischen dem ersten Netzknoten und dem virtuellen Netzknoten eine Fehlkonfiguration signalisiert wird.

23. Kommunikationsgerät nach einem der Ansprüche 1 oder 2, bei dem das Kommunikationsgerät derart eingerichtet und ausgestaltet ist, daß bei Konfiguration des virtuellen Netzknotens überprüft wird, ob sämtliche mit dem virtuellen Netzknoten verknüpften Kommunikationsgeräte innerhalb des zweiten Teilnetzes miteinander verbunden sind, und daß bei einem negativen Überprüfungsergebnis eine Fehlkonfiguration signalisiert wird.

24. Kommunikationsgerät nach einem der Ansprüche 18 bis 23, bei dem Mittel zum Austauschen von Nachrichten mit Topologieinformationen des ersten Teilnetzes mit Netzknoten des zweiten Teilnetzes zugeordneten weiteren Kommunikationsgeräten entsprechend dem Parallel- oder Ringredundanz-Protokoll vorgesehen sind.

25. Kommunikationsgerät nach Anspruch 24,
bei dem Mittel zum Vergleichen von ausgetauschten Nachrichten mit Topologieinformationen des ersten Teilnetzes mit lokal vorliegenden Topologieinformationen des ersten Teilnetzes und zum Ermitteln von resultierenden Topologieinformationen des ersten Teilnetzes in Abhängigkeit von einem Vergleichsergebnis vorgesehen sind.

26. Kommunikationsgerät nach Anspruch 25,
bei dem Mittel zur Konfigurationsanpassung des Kommunikationsgeräts hinsichtlich geschlossener und/oder geöffneter Verbindungen zum ersten Teilnetz anhand der ermittelten resultierenden Topologieinformationen des ersten Teilnetzes vorgesehen sind.

## Claims

1. Method for transmitting messages in an industrial communication network which can be redundantly operated, in which
- messages are transmitted in a first subnetwork with a tree topology in accordance with a spanning tree protocol, communication devices associated with network nodes of the first subnetwork interchanging messages containing topology information with one another in order to form a tree topology, and a root network node being determined as the basic element of a tree topology by the communication devices associated with the network nodes of the first subnetwork on the basis of the interchanged topology information, and loop-free connections being set up from the root network node to the remaining network nodes of the first subnetwork,
- messages are transmitted in a second subnetwork in accordance with a parallel or ring redundancy protocol,
- the first and second subnetworks are coupled to one another via a plurality of communication devices,
- a virtual network node which is connected to all network nodes of the second subnetwork via a respective virtual connection which cannot be interrupted by an error is configured as the root network node of the first subnetwork,
- topology information for the first subnetwork, which comprises the virtual network node, is configured as received topology information for the first subnetwork at a respective virtual terminal connection of communication devices associated with the network nodes of the second subnetwork,
- failure of a communication device associated with a network node of the second subnetwork or of a connection between two network nodes of the second subnetwork is handled solely in accordance with the parallel or ring redundancy protocol, a configuration of the virtual network node as the root network node of the first subnetwork being retained.

2. Method according to Claim 1,
in which the virtual network node is configured by activating a respective virtual terminal connection on at least two communication devices associated with network nodes of the second subnetwork.

3. Method according to Claim 2,
in which, when configuring the virtual network node, topology information for the first subnetwork is first of all checked, in each case using a node identifier associated with a root network node, in order to determine whether a virtual network node identified by its node identifier is already present inside the first subnetwork, and in which a virtual terminal connection on a first communication device associated with a first network node of the second subnetwork is activated only in the case of a negative check result, disappearing path costs being associated with a virtual connection between the first network node and the virtual network node.

4. Method according to Claim 3,
in which, in the case of a positive check result, path costs between a first network node of the second subnetwork, which is associated with the first communication device, and the virtual network node are determined, and in which a virtual terminal connection on a second communication device associated with a second network node of the second subnetwork is activated only in the case of disappearing path costs between the first network node and the virtual network node, disappearing path costs being associated with a virtual connection between the second network node and the virtual network node.

5. Method according to Claim 4,
in which an incorrect configuration is signaled in the case of non-disappearing path costs between the first network node and the virtual network node.

6. Method according to either of Claims 1 and 2,
in which, when configuring the virtual network node, a check is carried out in order to determine whether all communication devices linked to the virtual network node are connected to one another inside the second subnetwork, and in which an incorrect configuration is signaled in the case of a negative check result.

7. Method according to one of Claims 1 to 6,
in which the communication devices associated with the network nodes of the second subnetwork interchange messages containing topology information for the first subnetwork with one another in accordance with the parallel or ring redundancy protocol, compare said messages with locally available topology information for the first subnetwork and determine resultant topology information for the first subnetwork on the basis of a comparison result.

8. Method according to Claim 7,
in which the communication devices associated with the network nodes of the second subnetwork use the determined resultant topology information for the first subnetwork to adapt their configuration with respect to closed and/or open connections to the first subnetwork.

9. Method according to one of Claims 1 to 8,
in which the topology information for the first subnetwork comprises details of existing connections between network nodes of the first subnetwork, and in which loop-free connections from the root network node to the remaining network nodes of the first subnetwork are set up using a determination of minimum path costs to the root network node.

10. Method according to one of Claims 1 to 9,
in which messages are transmitted between communication devices associated with the network nodes of the second subnetwork only in accordance with the parallel or ring redundancy protocol.

11. Method according to one of Claims 1 to 10,
in which the resultant topology information for the first subnetwork is consistently determined by all communication devices associated with the network nodes of the second subnetwork.

12. Method according to Claim 11,
in which the communication devices associated with the network nodes of the second subnetwork provide consistent resultant topology information for use of the spanning tree protocol in the first subnetwork.

13. Method according to one of Claims 1 to 12,
in which the spanning tree protocol is the rapid spanning tree protocol or the multiple spanning tree protocol.

14. Method according to Claim 13,
in which the messages containing topology information for the first subnetwork are bridge protocol data units.

15. Method according to Claim 13 or 14,
in which the messages containing topology information for the first subnetwork each comprise a port priority vector which is interchanged and compared among communication devices associated with the network nodes of the second subnetwork.

16. Method according to one of Claims 1 to 15,
in which the communication devices associated with the network nodes of the first and/or second subnetwork are switches or bridges.

17. Method according to one of Claims 1 to 16,
in which the parallel or ring redundancy protocol is the parallel redundancy protocol, the high-availability seamless redundancy protocol or the media redundancy protocol.

18. Communication device for an industrial communication network which can be redundantly operated and comprises a first subnetwork with a tree topology and message transmission in accordance with a spanning tree protocol, a second subnetwork with message transmission in accordance with a parallel or ring redundancy protocol and a plurality of communication devices which couple both subnetworks, having
- means for transmitting messages inside the second subnetwork in accordance with the parallel or ring redundancy protocol,
- means for configuring a root network node of the first subnetwork as a virtual network node which is connected to all network nodes of the second subnetwork via a respective virtual connection which cannot be interrupted by an error,
- means for configuring topology information for the first subnetwork, which comprises the virtual network node, as topology information for the first subnetwork received at a virtual terminal connection, the topology information being intended to determine a root network node as the basic element of the tree topology, and the root network node forming a starting point for setting up loop-free connections to the remaining network nodes of the first subnetwork,
- means for handling failure of a communication device associated with a network node of the second subnetwork or of a connection between two network nodes of the second subnetwork solely in accordance with the parallel or ring redundancy protocol, a configuration of the virtual network node as the root network node of the first subnetwork being retained.

19. Communication device according to Claim 18,
in which the virtual network node is configured by activating a virtual terminal connection on at least two communication devices associated with network nodes of the second subnetwork.

20. Communication device according to Claim 19,
in which the communication device is set up and configured in such a manner that, when configuring the virtual network node, topology information for the first subnetwork is first of all checked, in each case using a node identifier associated with a root network node, in order to determine whether a virtual network node identified by its node identifier is already present inside the first subnetwork, and in such a manner that a virtual terminal connection on a first communication device associated with a first network node of the second subnetwork is activated only in the case of a negative check result, disappearing path costs being associated with a virtual connection between the first network node and the virtual network node.

21. Communication device according to Claim 20,
in which the communication device is set up and configured in such a manner that, in the case of a positive check result, path costs between a first network node of the second subnetwork, which is associated with the first communication device, and the virtual network node are determined, and in such a manner that a virtual terminal connection on a second communication device associated with a second network node of the second subnetwork is activated only in the case of disappearing path costs between the first network node and the virtual network node, disappearing path costs being associated with a virtual connection between the second network node and the virtual network node.

22. Communication device according to Claim 21,
in which the communication device is set up and configured in such a manner that an incorrect configuration is signaled in the case of non-disappearing path costs between the first network node and the virtual network node.

23. Communication device according to either of Claims 1 and 2,
in which the communication device is set up and configured in such a manner that, when configuring the virtual network node, a check is carried out in order to determine whether all communication devices linked to the virtual network node are connected to one another inside the second subnetwork, and in such a manner that an incorrect configuration is signaled in the case of a negative check result.

24. Communication device according to one of Claims 18 to 23, in which means for interchanging messages containing topology information for the first subnetwork with further communication devices associated with network nodes of the second subnetwork in accordance with the parallel or ring redundancy protocol are provided.

25. Communication device according to Claim 24,
in which means for comparing interchanged messages containing topology information for the first subnetwork with locally available topology information for the first subnetwork and for determining resultant topology information for the first subnetwork on the basis of a comparison result are provided.

26. Communication device according to Claim 25,
in which means for adapting the configuration of the communication device with regard to closed and/or open connections to the first subnetwork using the determined resultant topology information for the first subnetwork are provided.

## Revendications

1. Procédé de transmission de messages dans un réseau de communication industriel pouvant fonctionner de manière redondante, dans lequel
- on transmet des messages dans un premier sous-réseau ayant une topologie en arbre conformément à un protocole arborescent, des appareils de communication associés à des noeuds du premier sous-réseau échangeant, pour la formation d'une topologie en arbre, des messages entre eux ayant des informations de topologie et un noeud de réseau-racine étant, au moyen des informations de topologie échangées, déterminé par les appareils de communication associés au noeud du premier sous-réseau, comme élément de base d'une topologie en arbre et dans lequel, en partant du noeud de réseau-racine, on forme des liaisons sans boucle avec les autres noeuds du premier sous-réseau,
- on transmet des messages dans un deuxième sous-réseau conformément à un protocole parallèle ou de redondance en anneau,
- on couple entre eux le premier et le deuxième sous-réseaux par une multiplicité d'appareils de communication,
- on configure, comme noeud de réseau-racine du premier sous-réseau, un noeud de réseau virtuel, qui est relié à l'ensemble des noeuds du deuxième sous-réseau par respectivement une liaison virtuelle, qui ne peut pas être interrompue par une erreur,
- on configure, comme information de topologie reçue du premier sous-réseau, l'information de topologie comprenant le noeud de réseau virtuel du premier sous-réseau sur respectivement une borne virtuelle des appareils de communication associés respectivement aux noeuds du deuxième sous-réseau,
- on traite une panne d'un appareil de communication associé à un noeud du deuxième sous-réseau ou d'une liaison entre deux noeuds du deuxième sous-réseau, exclusivement conformément au protocole parallèle ou redondant en anneau, une configuration du noeud de réseau virtuel étant conservée comme noeud de réseau-racine du premier sous-réseau.

2. Procédé suivant la revendication 1,
dans lequel on configure le noeud de réseau virtuel, par activation respectivement d'une borne virtuelle, sur au moins deux appareils de communication, qui sont associés à des noeuds du deuxième sous-réseau.

3. Procédé suivant la revendication 2,
dans lequel on contrôle d'abord, dans la configuration du noeud de réseau virtuel, des informations de topologie du premier sous-réseau, respectivement au moyen d'un identificateur de noeud associé au noeud de réseau-racine, sur le point de savoir s'il y a déjà, à l'intérieur du premier sous-réseau, un noeud de réseau virtuel **caractérisé par** son identificateur de noeud et dans lequel, seulement si le résultat du contrôle est négatif, on active une borne virtuelle sur un premier appareil de communication, qui est associé à un premier noeud du deuxième sous-réseau, des coûts de trajet disparaissant étant associés à une liaison virtuelle entre le premier noeud du réseau et le noeud du réseau virtuel.

4. Procédé suivant la revendication 3,
dans lequel, si le résultat du contrôle est positif, on détermine des coûts du trajet entre un premier noeud du deuxième sous-réseau associé au premier appareil de communication et le noeud du réseau virtuel et dans lequel, ce n'est que si les coûts du trajet entre le premier noeud du réseau et le noeud du réseau virtuel disparaissent, que l'on active une borne virtuelle sur un deuxième appareil de communication, qui est associé à un deuxième noeud du deuxième sous-réseau, des coûts de trajet disparaissant étant associés à la liaison virtuelle entre le deuxième noeud du réseau et le noeud du réseau virtuel.

5. Procédé suivant la revendication 4,
dans lequel, si les coûts du trajet entre le premier noeud du réseau et le noeud du réseau virtuel ne disparaissent pas, une configuration défectueuse est signalée.

6. Procédé suivant l'une des revendications 1 ou 2,
dans lequel on contrôle, dans la configuration du noeud de réseau virtuel, si l'ensemble des appareils de communication, combinés au noeud de réseau virtuel, sont reliés entre eux à l'intérieur du deuxième sous-réseau et dans lequel, si le résultat du contrôle est négatif, une configuration défectueuse est signalée.

7. Procédé suivant l'une des revendications 1 à 6,
dans lequel les appareils de communication, associés aux noeuds du deuxième sous-réseau, échangent entre eux des messages ayant des informations de topologie du premier sous-réseau, conformément au protocole parallèle ou redondant en anneau, les comparent à des informations de topologie présentes localement du premier sous-réseau et déterminent, en fonction d'un résultat de la comparaison, des informations de topologie résultantes du premier sous-réseau.

8. Procédé suivant la revendication 7,
dans lequel les appareils de communication associés au noeud du deuxième sous-réseau adaptent, au moyen des informations de topologie résultantes déterminées du premier sous-réseau, leur configuration en ce qui concerne des liaisons ouvertes et/ou fermées avec la première partie du réseau.

9. Procédé suivant l'une des revendications 1 à 8,
dans lequel les informations de topologie du premier sous-réseau comprennent des indications sur des liaisons existantes entre des noeuds du premier sous-réseau, et dans lequel on forme des liaisons sans boucle partant du noeud de réseau-racine avec les autres noeuds du premier sous-réseau, au moyen d'une détermination de coût de trajet minimum vers le noeud de réseau-racine.

10. Procédé suivant l'une des revendications 1 à 9,
dans lequel on transmet des messages entre des appareils de communication associés au noeud du deuxième sous-réseau, exclusivement conformément au protocole parallèle ou redondant en anneau.

11. Procédé suivant l'une des revendications 1 à 10,
dans lequel on détermine les informations de topologie résultantes du premier sous-réseau unitairement par tous les appareils de communication associés au noeud du deuxième sous-réseau.

12. Procédé suivant la revendication 11,
dans lequel les informations de topologie résultantes unitaires sont, par les appareils de communication associés au noeud du deuxième sous-réseau, mises à disposition pour l'utilisation du protocole arborescent dans le premier sous-réseau.

13. Procédé suivant l'une des revendications 1 à 12,
dans lequel le protocole arborescent est le protocole spanning tree, le protocole rapid spanning tree ou le protocole multiple spanning tree.

14. Procédé suivant la revendication 13,
dans lequel les messages ayant des informations de topologie du premier sous-réseau sont des bridge protocol data units.

15. Procédé suivant la revendication 13 ou 14,
dans lequel les messages ayant des informations de topologie du premier sous-réseau comprennent respectivement un port priority vector, qui est échangé et égalisé entre les appareils de communication associés au noeud du deuxième sous-réseau.

16. Procédé suivant l'une des revendications 1 à 15,
dans lequel les appareils de communication associés au noeud du premier et/ou deuxième sous-réseau sont des switches ou des bridges.

17. Procédé suivant l'une des revendications 1 à 14,
dans lequel le protocole parallèle ou de redondance en anneau est le protocole parallèle redundancy, le protocole high-availability seamless redundancy ou le protocole media redundancy.

18. Appareil de communication pour un réseau de communication industriel pouvant fonctionner de manière redondante, qui comprend un premier sous-réseau ayant une topologie en arbre ainsi qu'une transmission de messages correspondant à un protocole arborescent, un deuxième sous-réseau ayant une transmission de messages correspondant à un protocole parallèle ou redondant en anneau et une multiplicité d'appareils de communication couplant les deux sous-réseaux, comprenant
- des moyens de transmission de messages au sein du deuxième sous-réseau conformément au protocole parallèle ou de redondance en anneau,
- des moyens de configuration d'un noeud de réseau-racine du premier sous-réseau comme noeud de réseau virtuel, qui est, par respectivement une liaison virtuelle ne pouvant pas être interrompue par une erreur, relié à tous les noeuds du deuxième sous-réseau,
- des moyens de configuration d'informations de topologie comprenant les noeuds du réseau virtuels du premier sous-réseau, comme information de topologie reçue sur une borne virtuelle du premier sous-réseau, les informations de topologie étant prévues, pour une détermination d'un noeud de réseau-racine, comme élément de base de la topologie en arbre, et dans lequel le noeud de réseau-racine forme un point de départ pour un établissement de liaison sans boucle avec les autres noeuds du premier sous-réseau,
- des moyens de traitement d'une panne d'un appareil de communication associé à un noeud du deuxième sous-réseau ou d'une liaison entre deux noeuds du deuxième sous-réseau, exclusivement conformément au protocole parallèle ou de redondance en anneau, un maintien d'une configuration du noeud de réseau virtuel, comme noeud de réseau-racine, du premier sous-réseau étant prévu.

19. Appareil de communication suivant la revendication 18,
dans lequel une configuration du noeud du réseau virtuel s'effectue par activation d'une borne virtuelle sur au moins deux appareils de communication, qui sont associés au noeud du deuxième sous-réseau.

20. Appareil de communication suivant la revendication 19,
dans lequel l'appareil de communication est conçu et conformé de manière à, lors de la configuration du noeud de réseau virtuel, contrôler d'abord des informations de topologie du premier sous-réseau, respectivement au moyen d'un identificateur de noeud associé à un noeud de réseau-racine, sur le point de savoir s'il y a déjà un noeud du réseau virtuel **caractérisé par** son identificateur de noeud, au sein du premier sous-réseau, et en ce que, seulement si le résultat du contrôle est négatif, une borne virtuelle sur un premier appareil de communication est activée, appareil qui est associé à un premier noeud du deuxième sous-réseau, un coût de trajet disparaissant étant associé à une liaison virtuelle entre le premier noeud du réseau et le noeud du réseau virtuel.

21. Appareil de communication suivant la revendication 20,
dans lequel l'appareil de communication est conçu et conformé de manière à, si le résultat du contrôle est positif, déterminer des coûts de trajet entre un premier noeud, associé au premier appareil de communication, du deuxième sous-réseau et le noeud du réseau virtuel, et de manière à, seulement si les coûts du trajet entre le premier noeud du réseau et le noeud du réseau virtuel disparaissent, activer une borne virtuelle sur un deuxième appareil de communication, qui est associé à un deuxième noeud du deuxième sous-réseau, des coûts de trajet disparaissant étant associés à une liaison virtuelle entre le deuxième noeud du réseau et le noeud du réseau virtuel.

22. Appareil de communication suivant la revendication 21,
dans lequel l'appareil de communication est conçu et conformé pour signaler une configuration défectueuse, si les coûts du trajet entre le premier noeud du réseau et le noeud du réseau virtuel ne disparaissent pas.

23. Appareil de communication suivant l'une des revendications 1 ou 2,
dans lequel l'appareil de communication est conçu et conformé de manière à contrôler, lors de la configuration du noeud du réseau virtuel, si tous les appareils de communication combinés au noeud du réseau virtuel au sein du deuxième sous-réseau sont reliés entre eux et de manière à signaler une configuration défectueuse si le résultat du contrôle est négatif.

24. Appareil de communication suivant l'une des revendications 18 ou 23,
dans lequel il est prévu des moyens d'échange de messages ayant des informations de topologie du premier sous-réseau avec d'autres appareils de communication associés au noeud du deuxième sous-réseau, conformément au protocole parallèle ou à redondance en anneau.

25. Appareil de communication suivant la revendication 24,
dans lequel il est prévu des moyens de comparaison de messages échangés des informations de topologie du premier sous-réseau à des informations de topologie présentes localement du premier sous-réseau et de détermination d'informations de topologie résultantes du premier sous-réseau en fonction d'un résultat de la comparaison.

26. Appareil de communication suivant la revendication 25,
dans lequel il est prévu des moyens d'adaptation de la configuration de l'appareil de communication en ce qui concerne des liaisons fermées et/ou ouvertes avec le premier sous-réseau, au moyen des informations de topologie résultantes déterminées du premier sous-réseau.
